# EUROPÄISCHE PATENTSCHRIFT

(11) **EP 1 838 543 B1**
(45) Veröffentlichungstag und Bekanntmachung des Hinweises auf die Patenterteilung: **18.03.2009**
(21) Anmeldenummer: 05808183.7
(22) Anmeldetag: 25.10.2005
(51) Int. Cl.: B60J 7/06

(54) **KRAFTFAHRZEUG MIT EINEM ÖFFNUNGSFÄHIGEN DACH**
MOTOR VEHICLE HAVING A ROOF THAT CAN BE OPENED
VÉHICULE AUTOMOBILE À TOIT OUVRANT

(30) Priorität: 09.01.2005 WO PCT/EP2005/000116
(43) Veröffentlichungstag der Anmeldung: 03.10.2007
(73) Patentinhaber: Webasto AG, 82131 Stockdorf (DE)
(72) Erfinder: GATTA, Antonino, Woodbridge, Ontario L4L-3V1 (CA)
(74) Vertreter: Konnerth, Dieter Hans
(86) Internationale Anmeldenummer: PCT/EP2005/011435
(87) Internationale Veröffentlichungsnummer: WO 2006/072272

(56) Entgegenhaltungen:
- EP-A- 1 500 563
- WO-A-03/076222
- DE-A1- 10 131 541

## Beschreibung

Die Erfindung betrifft ein Kraftfahrzeug mit einem öffnungsfähigen Dach und einer Dachschließeinrichtung, die zwischen einer eine Dachöffnung verschließenden Schließstellung und einer die Dachöffnung freigebenden Ablagestellung verstellbar ist, wobei innerhalb der Dachschließeinrichtung eine Öffnung vorgesehen ist, die mittels eines bewegbaren Schließelements wahlweise freizugeben oder zu verschließen ist.

Aus der WO 03/076222 A ist ein derartiges Kraftfahrzeug in Gestalt eines Cabriolets bekannt geworden, das ein ablegbares Dach mit einer Heckscheibe aufweist, die eine Öffnung zwischen seitlichen Tragsäulen des Daches wahlweise freigeben oder verschließen kann.

Aus der EP 0 101 322 A2 ist ein Fahrzeug in der Art einer Stufenhecklimousine mit einem öffnungsfähigen Dach bekannt geworden, das zumindest einen bewegbaren Deckel aufweist, der entlang dachfester Führungsschienen verschiebbar geführt ist und zwischen einer Schließstellung, in der er eine Dachöffnung abdeckt, und einer Ablagestellung, in der er in einem Aufnahmeraum in einem Kofferraumdeckel aufgenommen ist, verstellbar ist. Eine Heckscheibe kann gleichfalls an Führungen verschiebbar gelagert sein und in den Aufnahmeraum im Kofferraumdeckel verschoben werden. In ihrer Ablagestellung im Aufnahmeraum haben die abgelegten Deckel wie auch die Heckscheibe keine Nutzfunktion.

Aus der DE 101 31 541 A1 ist ein Kraftfahrzeug mit einer verschwenkbaren Dacheinheit bekannt geworden, die als einteilige L-förmige Struktur gebildet ist und um eine feste Schwenkachse zwischen der Schließstellung in der Dachöffnung und der Ablagestellung verstellbar ist, in der sie im Fahrgastraum hinter den Frontsitzen fixiert ist und die Sitzfläche und die Lehne mindestens eines Hecksitzes bildet. Die einteilige starre L-förmige Struktur der Dacheinheit benötigt beim Verschwenken einen vergleichsweise großen Freiraum für ihren Bewegungsweg. Als Alternative zu einer festen Schwenkachse kann die Dacheinheit zur Schwenkbewegung innerhalb einer Führungsschiene seitlich der Hecksitze geführt sein. Die Dacheinheit bzw. die L-förmige Struktur kann eine Heckscheibe enthalten, da eine fahrzeugseitige Heckscheibe im Bewegungsweg anzuordnen wäre. Zur Erhöhung der Bequemlichkeit können zwei Sitzpolster vorgesehen sein, die die Innenseite der gegebenenfalls vorhandenen Heckscheibe abdecken. Wenn die von der L-förmigen Struktur gebildeten Rücksitze von Insassen besetzt sind, kann die Dachöffnung im Bedarfsfall jedoch nicht mehr geschlossen werden

Aus der EP 0 803 390 A1 ist ein Fahrzeug mit einer Dachöffnung bekannt, die von einem Faltdach verschließbar ist. Beim Öffnen des Faltdaches kann dieses in einen Aufnahmeraum verschoben werden, der in einem hinteren Querträger vorgesehen ist. Der Querträger ist an seitlichen Dachlängsholmen des Fahrzeugdaches lösbar befestigt, so daß er bei geöffnetem Faltdach vom Fahrzeugdach bzw. den Dachlängsholmen entnommen werden kann.

Der Erfindung liegt die Aufgabe zugrunde, ein eingangs genanntes Kraftfahrzeug zu schaffen, das im Hinblick auf seine Nutzungsmöglichkeiten verbessert ist

Die Aufgabe wird erfindungsgemäß dadurch ein Kraftfahrzeug mit den Merkmalen des Anspruchs 1 gelöst.
Vorteilhafte Ausgestaltungen des erfindungsgemäßen Kraftfahrzeugs sind in den abhängigen Ansprüchen angegeben.

Die gegenüber der Dachschließeinrichtung kleinflächige Öffnung kann in ihrer Öffnungsstellung zur Belüftung des Fahrzeugs sowohl im Stand wie auch in Fahrbetrieb genutzt werden, ohne dass dabei die Dachschließeinrichtung geöffnet werden müsste.

Wenn das Schließelement sowohl bei geschlossener wie auch bei abgelegter Dachschließeinrichtung zwischen der Offenstellung und der Schließstellung zu verstellen ist, so kann die freigelegte Öffnung auch bei abgelegter Dachschließeinrichtung genutzt werden.

Diese zusätzliche Nutzung der Öffnung ist erfindungsgemäß von Vorteil, da die Dachschließeinrichtung in ihrer Ablagestellung eine Funktionsbaugruppe und insbesondere zumindest einen Rücksitz des Fahrzeugs bildet, so dass, während die Dachschließeinrichtung in der Ablagestellung angeordnet ist, das Schließelement in seiner Offenstellung den Zugriff zu einer zugeordneten Sicherungseinrichtung, insbesondere zumindest einem Gurtschloß einer Sicherheitsgurteinrichtung, gestattet, die bzw. das auf der dem Fahrzeuginnenraum abgewandten Seite der in ihre Ablagestellung verstellten Dachschließeinrichtung angeordnet ist. Bei geschlossener Dachschließeinrichtung kann somit der Fahrzeuginnenraum hinter den Vordersitzen als Nutz- oder Stauraum verwendet werden. Dieser Nutz- oder Stauraum kann durch zumindest eine weitere Person genutzt werden, die auf dem von der Dachschließeinrichtung in ihrer Ablagestellung gebildeten zumindest einen Rücksitz Platz findet. Zur Sicherung der zumindest einen Person kann in einfacher Weise die Sicherheitsgurteinrichtung verwendet werden, deren jeweiliges Gurtschloß am Fahrzeug befestigt ist und trotz der Abdeckung durch die geöffnete und abgelegte Dachschließeinrichtung durch die freigelegte Öffnung verwendet werden kann.

Gemäß einer bevorzugten Gestaltung weist die Dachschließeinrichtung zwei Deckel auf, die an fahrzeugseitigen Führungen verschiebbar gelagert sind, beim Bewegen entlang des Kurvenverlaufs der Führungen gegeneinander verschwenkbar sind und in der Ablagestellung eine Sitzfläche bzw. eine Rücklehne des zumindest einen Rücksitzes bilden. Die Unterteilung der Dachschließeinrichtung in zumindest zwei Deckel ermöglicht eine flexible Anpassung der Dachschließeinrichtung an den Verlauf der Führungen, so dass im Gegensatz zu einer insgesamt starr gebildeten Dachschließeinrichtung der erforderliche Bewegungsweg für die beiden Deckel schmaler ist und damit weniger freien Raum erfordert.

Das Schließelement ist vorzugsweise verschiebbar oder verschwenkbar an der Dachschließeinrichtung und insbesondere vorderrandseitig am hinteren Deckel der beiden Deckel gelagert und es ist zweckmäßigerweise eine Klappe, die mit ihrem Vorderrand zur Außenseite der Dachschließeinrichtung bzw. des Deckels hin ausschwenkbar ist. Die Anordnung der Öffnung bzw der Klappe oder des Schließelements an der Dachschließeinrichtung bzw. an einem der Deckel erfolgt in Abstimmung mit der Position des fahrzeugseitigen Gurtschlosses, kann ansonsten jedoch weitgehend beliebig erfolgen.

Des weiteren kann eine Zusatz-Dachschließeinrichtung vorgesehen sein, die die Dachöffnung wahlweise verschließt, wenn die Dachschließeinrichtung in ihrer Ablagestellung angeordnet ist. Diese Zusatz-Dachschließeinrichtung ist insbesondere dann von Vorteil, wenn die Dachschließeinrichtung in ihrer Ablagestellung eine Funktionsbaugruppe bildet oder eine Nutzfunktion aufweist, die ansonsten von einem anderen Bauteil zu erbringen wäre. Dieses ansonsten erforderliche Bauteil kann somit eingespart werden. Diese Nutzfunktion kann z. B. eine Trennwand zwischen dem Fahrgastraum und einem heckseitig anschließenden Raum wie einem Kofferraum oder einem Motorraum eines Mittel- oder Heckmotorfahrzeugs sein.

Bei geschlossener Dachschließeinrichtung kann der Fahrzeuginnenraum hinter den Vordersitzen als Nutz- oder Stauraum verwendet werden. Dieser Nutz- oder Stauraum kann durch zumindest eine weitere Person genutzt werden, die auf dem von der Dachschließeinrichtung in ihrer Ablagestellung gebildeten zumindest einen Rücksitz Platz findet. Soll bei Belegung des Rücksitzes durch eine Person die Dachöffnung z. B. witterungsbedingt geschlossen werden, so steht die von der Person als Sitz genutzte Dachschließeinrichtung hierfür nicht zur Verfügung. Mittels der Zusatz-Dachschließeinrichtung ist dann dennoch die Dachöffnung verschließbar.

Wenn die Dachschließeinrichtung an fahrzeugseitigen Führungen verschiebbar gelagert ist, die an beidseits der Dachöffnung angeordneten Dachlängsholmen und an den Seitenstrukturen der Karosserie angeordnet sind, kann durch die entlang des gesamten Bewegungswegs vorgesehenen Führungen eine sichere Lagerung der Dachschließeinrichtung sowohl in der Schließstellung an den Dachlängsholmen wie auch in der Offen- oder Ablagestellung im Fahrzeuginnenraum gewährleistet werden.

Zweckmäßigerweise sind die zwei Deckel eine gekoppelte Einheit, die gemeinsam zwischen der Schließstellung und der Ablagestellung verstellbar sind. Die Koppelung erfolgt über Gelenke oder Scharniere. Selbstverständlich sind geeignete Dichtungen zum gegenseitigen Abdichten der Deckel wie auch zum Abdichten der Deckel am Fahrzeugdach vorgesehen. Andererseits können die Deckel auch jeweils einzeln bewegbar sein, z. B. durch eine jeweilige Antriebseinrichtung.

Vorzugsweise enthält jede seitliche Führung einen ersten Führungsabschnitt am Dachlängsholm, einen zweiten Führungsabschnitt entlang einer Dachsäule und einen dritten Führungsabschnitt im Bodenbereich des Fahrzeuginnenraums hinter den Vordersitzen. Die Führung kann jedoch auch eine von dieser Gestaltung abweichenden Verlauf aufweisen, so daß sie an eine jeweilige Fahrzeuggestaltung und an eine jeweilige Dachschließeinrichtung angepaßt werden kann. Dabei ist es zweckmäßig, wenn jede Führung als kontinuierlich verlaufende Führungsschiene gebildet ist.

Eine bevorzugte Gestaltung sieht vor, daß die Zusatz-Dachschließeinrichtung am Fahrzeugdach lösbar angeordnet ist und insbesondere in einer kompakten Montageanordnung mittels einer Befestigungseinrichtung an den Dachlängsholmen und/oder den Dachsäulen einsetzbar bzw. davon entnehmbar ist.

Wenn die Zusatz-Dachschließeinrichtung am Fahrzeug dauerhaft angeordnet ist, kann sie beim Öffnen insbesondere in einem Dachquerträger oder in einem Aufnahmeraum in der Karosserie aufgenommen werden.

Des weiteren kann die Zusatz-Dachschließeinrichtung als Stoff- oder Faltverdeck gebildet sein und einen Verdeckquerträger zur Aufnahme des geöffneten Stoff-oder Faltverdecks bzw. von Spriegeln und Verdeckstoff aufweisen.

Gemäß einer weiteren Ausführungsform kann vorgesehen sein, daß die Zusatz-Dachschließeinrichtung in eine die Dachschließeinrichtung überdeckende Schließstellung verstellbar ist, wenn die Dachschließeinrichtung in ihrer Schließstellung angeordnet ist. Damit kann ein besonderer Effekt durch die Überdeckung mittels eines Stoffes erzielt werden.

Eine Erhöhung der Insassensicherheit ergibt sich, wenn eine Abstützeinrichtung vorgesehen ist, die eine zusätzliche Abstützung der in ihrer Ablagestellung angeordneten Dachschließeinrichtung, insbesondere des hinteren Deckels, bereitstellt. Damit wird das Gewicht einer auf dem Rücksitz sitzenden Person abgestützt. Sicherungseinrichtungen wie Sicherheitsgurte können ebenfalls an der Abstützeinrichtung wie auch an den Deckeln integriert sein.

Des weiteren kann eine insbesondere aufrecht stehende Heckscheibe hinter der Dachöffnung bzw. hinter den Rücksitzen fest oder bewegbar, insbesondere vertikal absenkbar, angeordnet sein. So kann gegebenenfalls eine absenkbare Heckscheibe den Bewegungsweg für die Dachschließeinrichtung freigeben, falls dies aufgrund ihrer Anordnung erforderlich sein sollte.

Schließlich kann die Dachschließeinrichtung bzw. können die Deckel innenseitig eine sitzgemäße körpergerechte Kontur aufweisen

Nachfolgend wird ein erfindungsgemäßes Kraftfahrzeug anhand eines Ausführungsbeispiels unter Bezugnahme auf die Zeichnung näher erläutert. Es zeigt:
- Fig. 1: in einer perspektivischen Draufsicht ein erfindungsgemäßes Fahr- zeug mit einem öffnungsfähigen Dach und einer in Schließstellung angeordneten Dachschließeinrichtung;
- Fig. 2: in einer Seitenansicht in teilweise aufgebrochener Darstellung das Fahrzeug mit geschlossener Dachschließeinrichtung;
- Fig. 3: in einer Ansicht gemäß Fig. 2 das Fahrzeug beim Öffnen des Da- ches, wobei die Dachschließeinrichtung in einer ersten Zwischen- stellung dargestellt ist;
- Fig. 4: in einer perspektivischen Draufsicht das Fahrzeug beim Öffnen des Daches, wobei die Dachschließeinrichtung in einer zweiten Zwi- schenstellung dargestellt ist;
- Fig. 5: in einer Ansicht gemäß Fig. 2 das Fahrzeug beim Öffnen des Da- ches, wobei die Dachschließeinrichtung in einer dritten Zwischen- stellung dargestellt ist;
- Fig. 6: in einer Ansicht gemäß Fig. 2 das Fahrzeug mit geöffnetem Dach, wobei die Dachschließeinrichtung in ihrer Ablagestellung angeordnet ist und Rücksitze bildet;
- Fig. 7: in einer perspektivischen Draufsicht das Fahrzeug mit abgelegter Dachschließeinrichtung und einer teilweise geöffneten Zusatz- Dachschließeinrichtung;
- Fig. 8: in einer perspektivischen Draufsicht das Fahrzeug mit geschlosse- ner Dachschließeinrichtung und einer in der Dachschließeinrichtung angeordneten kleinen Klappe, die zum Freigeben einer Belüftungs- öffnung nach oben aufgeschwenkt ist;
- Fig. 9: in einer perspektivischen Ansicht den Innenraum des Fahrzeugs, wobei die Dachschließeinrichtung in ihrer geöffneten Ablagestellung angeordnet ist und die Klappe geöffnet ist, so dass Sicherheitsgurt- schlösser zugänglich sind; und
- Fig. 10: in einer vergrößerten Ausschnittsansicht der Fig. 9 die geöffnete Klappe mit den hinter der Öffnung angeordneten Sicherheitsgurts- schlössern.

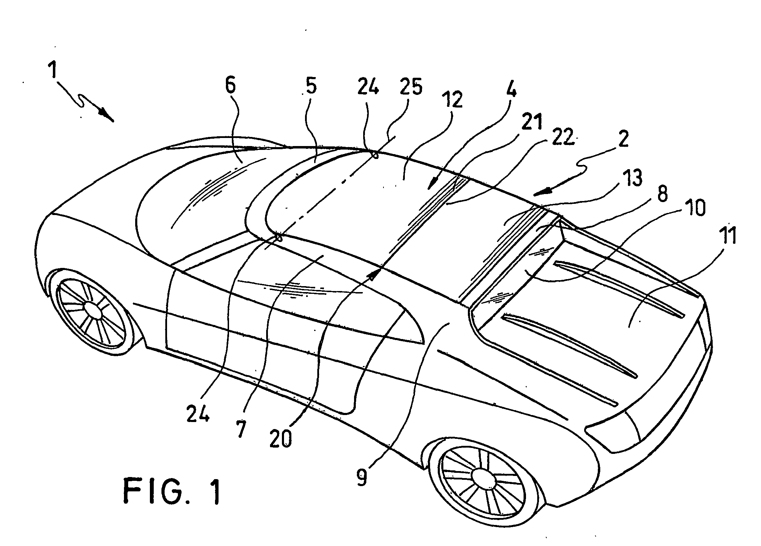

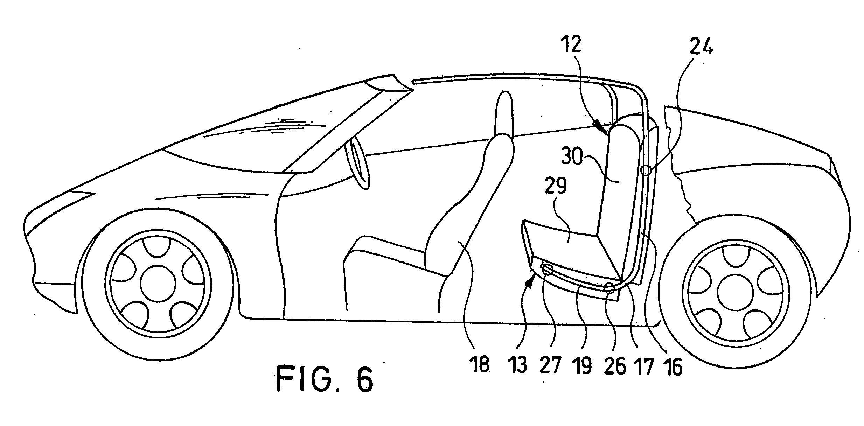

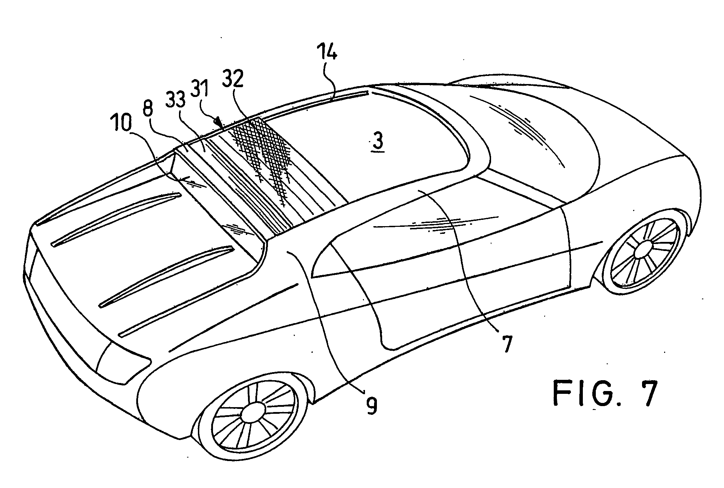

Ein Personenkraftfahrzeug 1 enthält (siehe Fig. 1) ein Dach 2 mit einer Dachöffnung 3 (Fig. 7) und einer Dachschließeinrichtung 4, mit der die der Dachöffnung 3 wahlweise zu verschließen (Fig. 1) oder freizugeben (Fig. 6) ist. Die Dachöffnung 3 ist vorne von einem Windlauf 5 oberhalb der Windschutzscheibe 6, seitlich jeweils von einem Dachlängsholm 7 und hinten von einem hinteren Querholm 8 begrenzt, der die beiden gegenüberliegenden Dachlängsholme 7 oder hintere sich gegenüberliegende Dachsäulen 9 miteinander verbindet und an diesen fest angebracht ist. Zwischen den Hinterenden der Dachlängsholme 7 oder den Dachsäulen 9 ist eine im wesentlichen aufrecht oder steil stehende Heckscheibe 10 als Abschluß des Fahrzeuginnenraums angeordnet, deren Oberrand an dem Querholm 8 anliegt. Der Querholm 8 kann auch von einem Rahmen der Heckscheibe 10 gebildet sein und nur mit der Heckscheibe 10 oder zusätzlich auch mit den Dachsäulen 9 fest verbunden sein. An die Heckscheibe 10 schließt sich heckseitig eine feste oder bewegbare Abdeckung 11 an, beispielsweise eine Klappe zum Abdecken eines Motorraumes im Falle eines Heckmotorfahrzeugs und/oder eines Kofferraumes.

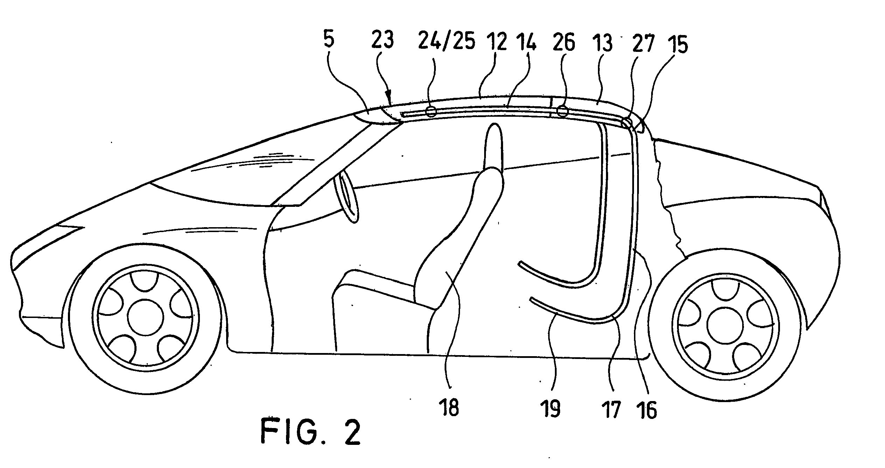

Die Dachschließeinrichtung 4 enthält einen ersten, vorderen Deckel 12 und einen zweiten, hinteren Deckel 13, die bei geschlossenem Dach 2 die Dachöffnung 3 zwischen dem Windlauf 5 und dem hinteren Querholm 8 flächig verschließen. Die beiden Deckel 12 und 13 sind mittels einer Deckelführungseinrichtung am Fahrzeug verstellbar gelagert. Die Deckelführungseinrichtung enthält an beiden Fahrzeugseiten jeweils eine Führung in der Art einer Führungsschiene (siehe Fig. 2), die in kontinuierlich verlaufender Anordnung einen am Dachlängsholm 7 vom Windlauf 5 bis zur Dachsäule 9 reichenden im wesentlichen horizontalen ersten Führungsabschnitt 14, einen sich anschließende nach unten gerichteten ersten Umlenkabschnitt 15 am Übergang vom Dachlängsholm 7 zur Dachsäule 9, einen entlang der Dachsäule 9 und der seitlichen Karosseriestruktur abwärts verlaufenden zweiten Führungsabschnitt 16, einen nach vorne gerichteten zweiten Umlenkabschnitt 17 und einen am Boden des Fahrzeuginnenraums hinter den Vordersitzen 18 nach vorne gerichteten und leicht ansteigenden dritten Führungsabschnitt 19 aufweist.

Die beiden Deckel 12 und 13 sind mittels einer Gelenkeinrichtung 20 wie z. B. einem Scharnier an ihren aneinander angrenzenden Rändern, d. h. dem Hinterrand 21 des vorderen Deckels 12 und dem Vorderrand 22 des hinteren Deckels 13, miteinander verbunden, so daß sie gegeneinander verschwenkbar sind. Der erste Deckel 12 weist an seinen gegenüberliegenden Außenrändern nahe seines Vorderrandes 23 jeweils eine Lagereinheit 24 auf, die an der zugeordneten seitlichen Führung in Eingriff ist und den ersten Deckel 12 somit entlang der Führung bewegbar lagert. Die beiden sich gegenüberliegenden Lagereinheiten 24 sind derart gestaltet, daß der vordere Deckel 12 relativ zur Führung um eine durch die Lagereinheiten 24 definierte Querachse 25 verschwenkt werden kann.

Der hintere Deckel 13 weist an jedem seiner gegenüberliegenden Außenränder eine vordere Lagereinheit 26 nahe oder an seinem Vorderrand 22 und eine hintere Lagereinheit 27 nahe oder an seinem Hinterrand 28 auf. Die an sich bekannten Lagereinheiten sind in den Figuren schematisch mit Kreisen dargestellt, sie enthalten z. B. einen an der Führung gelagerten Gleiter oder Schlitten mit einem daran schwenkbar gelagerten Lagerzapfen des Deckels 12 bzw. 13.

Mittels einer nicht dargestellten Antriebseinrichtung können die beiden Deckel 12 und 13 entlang der beiden Führungen 14, 15, 16, 17 und 19 zwischen der Schließstellung und der Offen- oder Ablagestellung bewegt werden. Die Antriebseinrichtung enthält einen z. B. elektrisch oder hydraulisch betriebenen Antriebsmotor, der ein entlang jeder Führung geführtes Antriebselement oder Antriebskabel bewegt, das zumindest mit einem der beiden Deckel 12 oder 13 verbunden ist, beispielsweise mit dem hinteren Deckel 13.

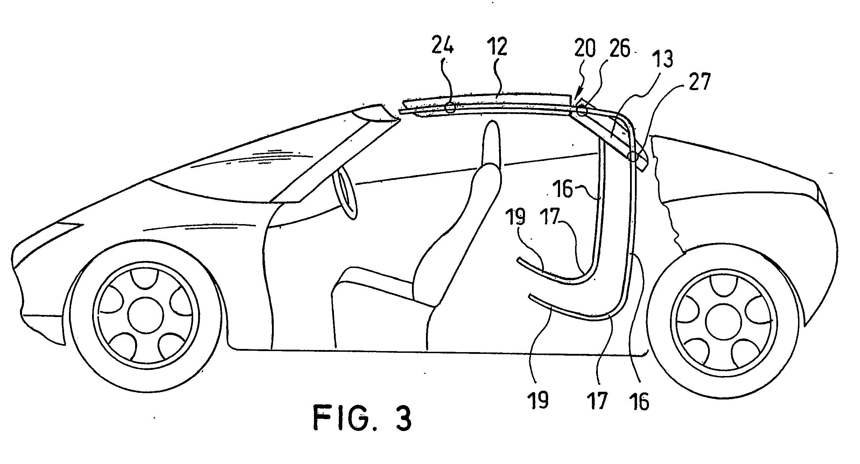

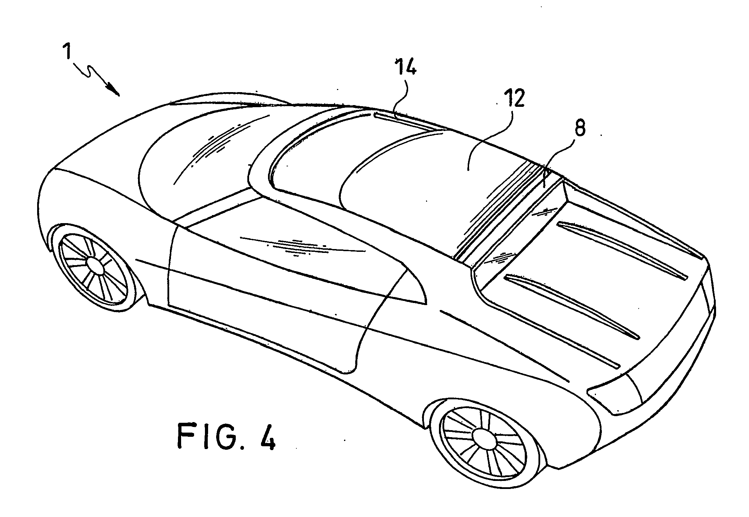

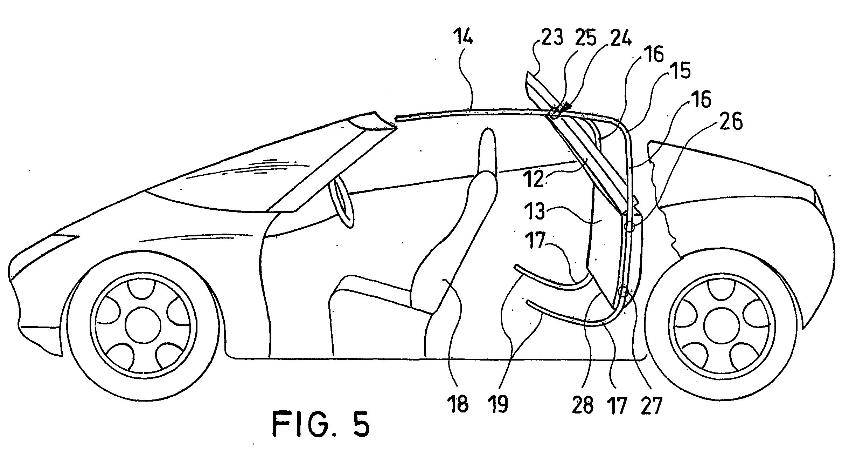

Beim Öffnen der Dachschließeinrichtung 4 bzw. der Deckel 12 und 13 bewegt sich der hintere Deckel 13 entlang der Führung, wobei zunächst sein Hinterrand 28 im Bereich des ersten Umlenkabschnitts 15 der Führung sich abwärts bewegt und sich je nach Verlauf der Führung im Bereich des Umlenkabschnitts 15 auch geringfügig rückwärts bewegen kann, so daß der hintere Deckel 13 um seine vordere Lagereinheit 26 abwärts schwenkt (Fig. 3). Der angekoppelte vordere Deckel 12 wird mitgenommen und nach hinten bewegt (Fig. 4 und 5). Beim weiteren Bewegen der beiden Deckel 12 und 13 erreicht der hinteren Deckel 13 eine vertikale Stellung während seiner Abwärtsbewegung vor der Innenseite der Heckscheibe 10 (siehe Fig. 5). Der vordere Deckel 12 folgt dem hinteren Deckel 13 und nimmt eine zunehmend geneigte Stellung ein. Schließlich folgt der sich vorausbewegende Hinterrand 28 des hinteren Deckels 13 dem zweiten Umlenkabschnitt 17 und wird bei der bezüglich des Fahrzeugs nach vorne gerichteten Bewegung in die Endposition der Ablagestellung wieder leicht angehoben, so daß der hintere Deckel 13 in einer horizontalen oder schräg nach hinten geneigten Stellung angeordnet ist, in der der Vorderrand 22 des hinteren Deckels 13 vor dem vertikalen zweiten Führungsabschnitt 16 angeordnet ist (Fig. 6). Der vordere Deckel 12 ist der Bewegung des hinteren Deckels 13 gefolgt und nimmt in der Endstellung eine leicht nach hinten geneigte Stellung ein, in der sein Vorderrand 23 in etwa am Oberende des vertikalen zweiten Führungsabschnitts 16 vor der Heckscheibe 10 angeordnet ist.

In dieser Stellung der beiden Deckel 12 und 13 bildet die nun nach oben weisende Unterseite des hinteren Deckels 13 eine Sitzfläche 29 einer hinteren Sitzbank bzw. von zwei Rücksitzen, während die nun nach vorne weisende Unterseite des vorderen Deckels 12 eine Rücklehne 30 der Sitzbank bzw. der beiden Rücksitze bildet.

Die beiden Deckel 12 und 13 weisen unterseitig eine körpergerecht geformte Auskleidung oder Polsterung auf oder sie sind z. B. als Schalenbauteile integral mit einer entsprechenden Form gebildet, die auch an der Oberseite sichtbar sein kann.

In dieser Ablagestellung der beiden Deckel 12 und 13 kann eine Abstützeinrichtung (nicht dargestellt) aktiv sein und zumindest den die Sitzfläche 29 bildenden hinteren Deckel 13 neben seiner Lagerung an der Führung zusätzlich an der Karosserie fest abstützen, so daß auch bei Belastung der Rücksitze durch Personen die Rücksitze fest gelagert sind.

Der Schließvorgang der beiden Deckel 12 und 13 erfolgt mittels der Antriebseinrichtung in umgekehrter Richtung. Statt eines motorischen Antriebs kann auch vorgesehen sein, daß die Dachschließeinrichtung bzw. die beiden Deckel 12, 13 manuell zu verschieben ist bzw. sind.

Zum Verschließen der freigelegten Dachöffnung 3 kann eine Zusatz-Dachschließeinrichtung vorgesehen sein (siehe Fig. 7), die z. B. als Faltverdeck 31 mit einem von Spriegeln getragenen Verdeckstoff 32 gebildet ist. Das Faltverdeck 31 weist einen Verdeckquerträger 33 auf, der im Bereich des hinteren Querholms 8 an den Dachlängsholmen 7 oder den Dachsäulen 9 lösbar angebracht ist und einen Aufnahmeraum aufweist, in dem der Verdeckstoff 32 mit den Spriegeln beim rückwärts gerichteten Öffnen des Faltverdecks 31 aufgenommen wird. Das Faltverdeck 31 kann an zusätzlichen, an den Dachlängsholmen 7 angeordneten Führungen oder an den vorhandenen Führungen bzw. Führungsabschnitten 14 zum Öffnen und Schließen geführt sein.

Das Faltverdeck 31 kann auch fest am Fahrzeug integriert sein und beispielsweise aus einer unteren Ablagestellung vor oder hinter der Heckscheibe 10 nach oben ausfahrbar sein. Zweckmäßigerweise enthält der Verdeckstoff dann einen transparenten Durchsichtsbereich, der bei geschlossenem Verdeck im wesentlichen deckungsgleich zur Heckscheibe ist, so daß die Sicht nach hinten gewährleistet ist.

Die Heckscheibe 10 kann an der Karosserie fest angebracht sein oder mittels einer Lagereinrichtung in eine abgesenkte Stellung verstellbar sein, z. B. an im wesentlichen vertikalen Führungsschienen absenkbar, um einen festen Drehpunkt schwenkbar oder mittels einer Gelenk oder Lenkereinrichtung schwenkbar sein. Dabei kann der hintere Querholm 8 mit der Heckscheibe 10 oder unabhängig davon aus seiner Stellung am Oberrand der Heckscheibe 10 entfernbar sein.

Grundsätzlich kann die Dachschließeinrichtung auch mehr als zwei Deckel aufweisen. So können z. B. zwei Deckel die Rücklehne oder die Sitzfläche bilden, wobei auch andere Kombinationen möglich sind. In den Deckeln der Dachschließeinrichtung kann ein Rücksitz oder es können auch zwei Rücksitze vorgesehen sein.

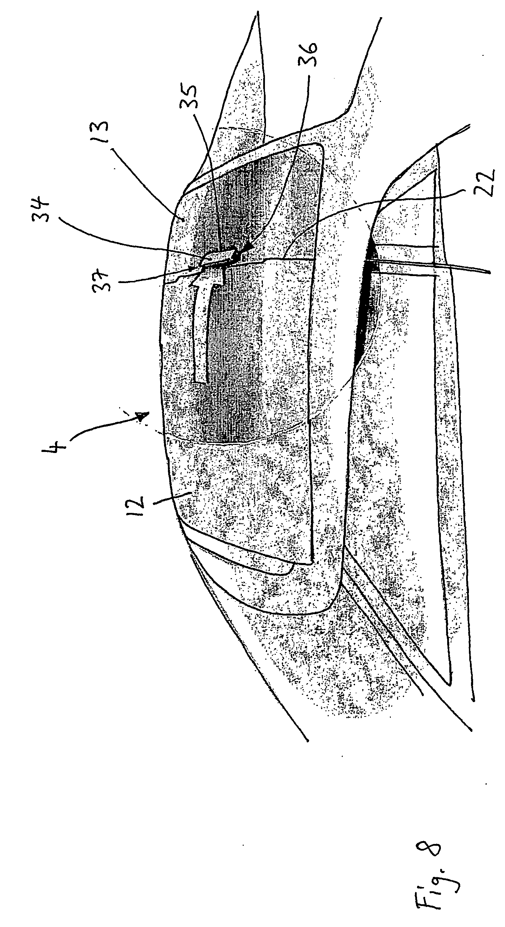

Fig. 8 zeigt die Dachschließeinrichtung 4 mit dem erfindungsgemäßen Schließelement, das z. B. als Klappe 34 gebildet ist, die an ihrem Hinterrand 35 mittels einer Lagereinrichtung, beispielsweise einer Gelenk- oder Scharniereinrichtung, im vorderen Bereich des hinteren Deckels 13 schwenkbar gelagert ist, so dass sie zwischen einer Schließstellung, in der sie eine Öffnung 36 im Bereich des Vorderrandes 22 des hinteren Deckels 13 verschließt, und einer Offenstellung, in der sie diese Öffnung 36 freigibt, verstellbar ist. Zweckmäßigerweise ist der Vorderrand 37 der Klappe 34 am Vorderrand 22 des hinteren Deckels 13 angeordnet und schwenkt beim Öffnen der Klappe 34 hoch, so dass im Fahrbetrieb eine Zwangslüftung durch den Fahrwind in das Fahrzeuginnere erfolgt.

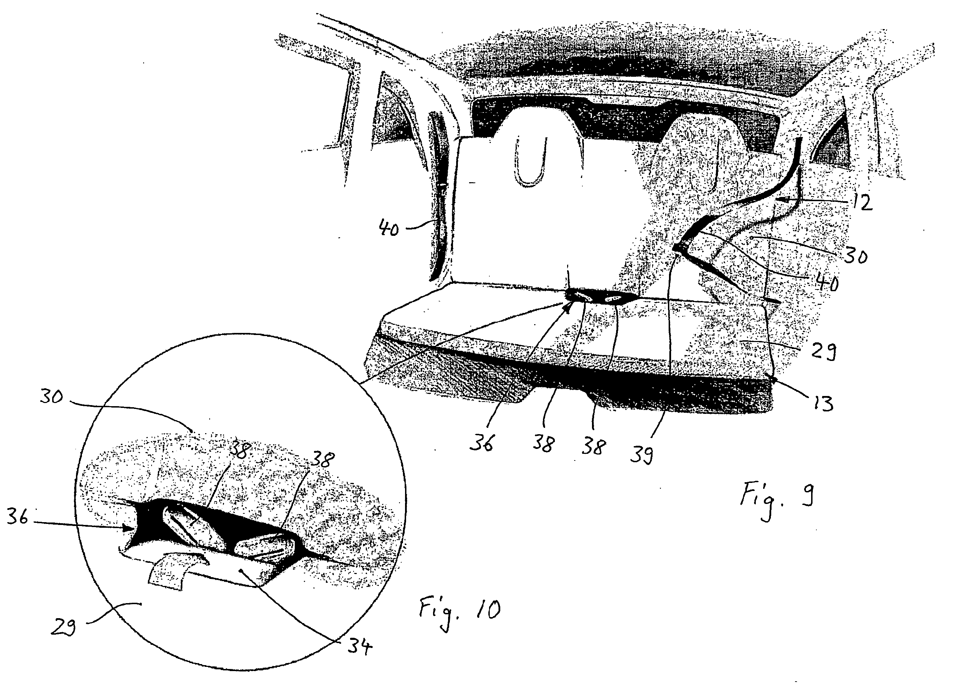

Wenn die beiden Deckel 12 und 13 der Dachschließeinrichtung 4 in ihrer offenen Ablagestellung angeordnet sind und Rücksitze bilden (siehe Fig. 9 und 10), sind zwei Sicherheitsgurtschlösser 38 hinter der Öffnung 36 angeordnet. Demzufolge kann bei geöffneter Klappe 34 eine Zunge 39 eines Sicherheitsgurtes 40 in das zugeordnete Sicherheitsgurtschloß 38 eingesteckt werden.

Die Klappe 34 kann derart gebildet sein, dass sie in jeder Stellung der Dachschließeinrichtung manuell oder mittels eines Antriebs verstellt werden kann und dass sie auch in jeder Stellung mit der Dachschließeinrichtung mitbewegt werden kann. Beispielsweise kann die Klappe 34 gegen eine Federkrafteinrichtung aufgeschwenkt und verriegelt werden und nach dem Entriegeln von der Federkrafteinrichtung wieder geschlossen werden, wobei eine Verriegelung der Klappe 34 in der Schließstellung vorgesehen sei kann. Statt der Schwenklagerung kann auch eine Schiebelagerung der Klappe 34 oder eine kombinierte Schwenk-Schiebelagerung vorgesehen sein.

### Bezugszeichenliste

- 1: Personenkraftfahrzeug
- 2: Dach
- 3: Dachöffnung
- 4: Dachschließeinrichtung
- 5: Windlauf
- 6: Windschutzscheibe
- 7: Dachlängsholm
- 8: Querholm
- 9: Dachsäule
- 10: Heckscheibe
- 11: Abdeckung
- 12: vorderer Deckel
- 13: hinterer Deckel
- 14: erster Führungsabschnitt
- 15: erster Umlenkabschnitt
- 16: zweiter Führungsabschnitt
- 17: zweiter Umlenkabschnitt
- 18: Vordersitz
- 19: dritter Führungsabschnitt
- 20: Gelenkeinrichtung
- 21: Hinterrand (vorderer Deckel)
- 22: Vorderrand (hinterer Deckel)
- 23: Vorderrand (vorderer Deckel)
- 24: Lagereinheit
- 25: Querachse
- 26: vordere Lagereinheit
- 27: hintere Lagereinheit
- 28: Hinterrand
- 29: Sitzfläche
- 30: Rücklehne
- 31: Faltverdeck
- 32: Verdeckstoff
- 33: Verdeckquerträger
- 34: Klappe
- 35: Hinterrand
- 36: Öffnung
- 37: Vorderrand
- 38: Sicherheitsgurtschloß
- 39: Zunge
- 40: Sicherheitsgurt

## Patentansprüche

1. Kraftfahrzeug mit einem öffnungsfähigen Dach (2) und einer Dachschließeinrichtung (4), die zwischen einer eine Dachöffnung (3) verschließenden Schließstellung und einer die Dachöffnung freigebenden Ablagestellung verstellbar ist,
wobei innerhalb der Dachschließeinrichtung (4) eine Öffnung (36) vorgesehen ist, die mittels eines bewegbaren Schließelements (34) wahlweise freizugeben oder zu verschließen ist,
**dadurch gekennzeichnet,**
**dass** die Dachschließeinrichtung (4) in ihrer Ablagestellung eine Funktionsbaugruppe bildet und
**dass**, wenn die Dachschließeinrichtung (4) in der Ablagestellung angeordnet ist, das Schließelement (34) in seiner Offenstellung den Zugriff zu einer zugeordneten Sicherungseinrichtung gestattet, die auf der dem Fahrzeuginnenraum abgewandten Seite der in ihre Ablagestellung verstellten Dachschließeinrichtung (4) angeordnet ist.

2. Kraftfahrzeug nach Anspruch 1,
**dadurch gekennzeichnet, dass** die Dachschließeinrichtung (4) zumindest einen Rücksitz (29, 30) des Fahrzeugs als Funktionsbaugruppe bildet und dass, wenn die Dachschließeinrichtung (4) in der Ablagestellung angeordnet ist, das Schließelement (34) in seiner Offenstellung den Zugriff zu zumindest einem Gurtschloß (38) einer Sicherheitsgurteinrichtung gestattet, das auf der dem Fahrzeuginnenraum abgewandten Seite der in ihre Ablagestellung verstellten Dachschließeinrichtung (4) angeordnet ist.

3. Kraftfahrzeug nach Anspruch 1 oder 2,
**dadurch gekennzeichnet, dass** das Schließelement (34) sowohl bei geschlossener wie auch bei abgelegter Dachschließeinrichtung (4) zwischen der Offenstellung und der Schließstellung zu verstellen ist.

4. Kraftfahrzeug nach einem der Ansprüche 1 bis 3,
**dadurch gekennzeichnet, dass** die Dachschließeinrichtung (4) zwei Deckel (12, 13) aufweist, die an fahrzeugseitigen Führungen (14, 15, 16, 17, 19) verschiebbar gelagert sind, beim Bewegen entlang des Kurvenverlaufs der Führungen (14, 15, 16, 17, 19) gegeneinander verschwenkbar sind und in der Ablagestellung eine Sitzfläche (29) bzw. eine Rücklehne (30) des zumindest einen Rücksitzes bilden.

5. Kraftfahrzeug nach einem der Ansprüche 1 bis 4,
**dadurch gekennzeichnet, dass** das Schließelement (34) verschiebbar oder verschwenkbar an der Dachschließeinrichtung (4) und insbesondere vorderrandseitig am hinteren Deckel (13) der beiden Deckel (12, 13) gelagert ist.

6. Kraftfahrzeug nach einem der Ansprüche 1 bis 5,
**dadurch gekennzeichnet, dass** das Schließelement eine Klappe (34) ist, die mit ihrem Vorderrand (37) zur Außenseite der Dachschließeinrichtung (4) bzw. des Deckels (13) hin ausschwenkbar ist.

7. Kraftfahrzeug nach einem der Ansprüche 1 bis 6,
**dadurch gekennzeichnet, dass** die Dachschließeinrichtung (4) an fahrzeugseitigen Führungen (14, 15, 16,17, 19) verschiebbar gelagert ist, die an beidseits der Dachöffnung (3) angeordneten Dachlängsholmen (7) und an den Seitenstrukturen der Karosserie angeordnet sind.

8. Kraftfahrzeug nach einem der Ansprüche 1 bis 7,
**dadurch gekennzeichnet, dass** eine Zusatz-Dachschließeinrichtung (31) vorgesehen ist, die die Dachöffnung (3) wahlweise verschließt, wenn die Dachschließeinrichtung (4) in ihrer Ablagestellung angeordnet ist.

9. Kraftfahrzeug nach einem der Ansprüche 1 bis 8,
**dadurch gekennzeichnet, dass** die zwei Deckel (12, 13) einzeln oder gemeinsam, insbesondere als gekoppelte Einheit, in die Ablagestellung bewegbar sind.

10. Kraftfahrzeug nach einem der Ansprüche 4 bis 9,
**dadurch gekennzeichnet, dass** jede seitliche Führung einen ersten Führungsabschnitt (14) am Dachlängsholm (7), einen zweiten Führungsabschnitt (16) entlang einer Dachsäule (9) und einen dritten Führungsabschnitt (19) im Bodenbereich des Fahrzeuginnenraums hinter den Vordersitzen (18) aufweist.

11. Kraftfahrzeug nach einem der Ansprüche 4 bis 10,
**dadurch gekennzeichnet, dass** jede Führung als kontinuierlich verlaufende Führungsschiene gebildet ist.

12. Kraftfahrzeug nach einem der Ansprüche 8 bis 11,
**dadurch gekennzeichnet, dass** die Zusatz-Dachschließeinrichtung (31) am Fahrzeugdach (2) lösbar angeordnet ist und insbesondere in einer kompakten Montageanordnung mittels einer Befestigungseinrichtung an den Dachlängsholmen (7) und/oder den Dachsäulen (9) einsetzbar bzw. davon entnehmbar ist.

13. Kraftfahrzeug nach einem der Ansprüche 8 bis 11,
**dadurch gekennzeichnet, dass** die Zusatz-Dachschließeinrichtung (31) am Fahrzeug dauerhaft angeordnet ist und beim Öffnen insbesondere in einem Dachquerträger oder in einem Aufnahmeraum in der Karosserie auf nehmbar ist.

14. Kraftfahrzeug nach einem der Ansprüche 8 bis 13,
**dadurch gekennzeichnet, dass** die Zusatz-Dachschließeinrichtung (31) als Faltverdeck gebildet ist und einen Verdeckquerträger (33) zur Aufnahme des geöffneten Faltverdecks bzw. von Spriegeln und Verdeckstoff aufweist.

15. Kraftfahrzeug nach einem der Ansprüche 8 bis 14,
**dadurch gekennzeichnet, dass** die Zusatz-Dachschließeinrichtung (31) in eine die Dachschließeinrichtung (4) überdeckende Schließstellung verstellbar ist, wenn die Dachschließeinrichtung (4) in ihrer Schließstellung angeordnet ist.

16. Kraftfahrzeug nach einem der Ansprüche 1 bis 15,
**dadurch gekennzeichnet, dass** eine Abstützeinrichtung vorgesehen ist, die eine zusätzliche Abstützung der in ihrer Ablagestellung angeordneten Dachschließeinrichtung (4), insbesondere des hinteren Deckels (13), bereitstellt.

17. Kraftfahrzeug nach einem der Ansprüche 1 bis 16,
**dadurch gekennzeichnet, dass** eine insbesondere aufrecht stehende Heckscheibe (10) hinter der Dachöffnung (3) fest oder bewegbar, insbesondere vertikal absenkbar, angeordnet ist.

18. Kraftfahrzeug nach einem der Ansprüche 1 bis 17,
**dadurch gekennzeichnet, dass** die Dachschließeinrichtung (4) innenseitig eine sitzgemäße körpergerechte Kontur aufweist.

## Claims

1. Motor vehicle having a roof (2) that can be opened and a roof closing device (4), which can be displaced between a closed position closing a roof opening (3) and a stored position exposing the roof opening,
within the roof closing device (4) there being provided an opening (36), which can be exposed or closed as desired by means of a movable closing element (34),
**characterized in that**
the roof closing device (4) forms a functional unit when in its stored position and,
when the roof closing device (4) is arranged in the stored position, the closing element (34), in its opened position, permits access to an associated safety device, which is arranged on the side facing away from the interior of the vehicle of the roof closing device (4) displaced into its stored position.

2. Motor vehicle according to Claim 1, **characterized in that** the roof closing device (4), forms at least one rear seat (29, 30) of the vehicle as a functional unit and, when the roof closing device (4) is arranged in the stored position, the closing element (34), in its open position, permits access to at least one belt buckle (38) of a safety belt device, which is arranged on the side facing away from the interior of the vehicle of the roof closing device (4) displaced into its stored position.

3. Motor vehicle according to Claim 1 or 2, **characterized in that** the closing element (34) can be displaced between the open position and the closed position both when the roof closing device (4) is closed and when the latter is stored.

4. Motor vehicle according to one of Claims 1 to 3, **characterized in that** the roof closing device (4) has two panels (12, 13), which are mounted such that they can be displaced on guides (14, 15, 16, 17, 19) at the sides of the vehicle, can be pivoted towards each other as they move along the course of the curve of the guides (14, 15, 16, 17, 19) and; in the stored position, respectively form a seat surface (29) and a back rest (30) of the at least one rear seat.

5. Motor vehicle according to one of Claims 1 to 4, **characterized in that** the closing element (34) is mounted such that it can be displaced or pivoted on the roof closing device (4) and in particular on the front side edge of the rear panel (13) of the two panels (12, 13).

6. Motor vehicle according to one of Claims 1 to 5, **characterized in that** the closing element is a flap (34), of which the front edge (37) can be pivoted outwards towards the outer side of the roof closing device (4) or of the panel (13).

7. Motor vehicle according to one of Claims 1 to 6, **characterized in that** the roof closing device (4) is mounted such that it can be displaced on guides (14, 15, 16, 17, 19) at the sides of the vehicle, which are arranged on roof longitudinal members (7) arranged on both sides of the roof opening (3), and on the side structures of the body.

8. Motor vehicle according to one of Claims 1 to 7, **characterized in that** an additional roof closing device (31) is provided, which closes the roof opening (3) as desired when the roof closing device (4) is arranged in its stored position.

9. Motor vehicle according to one of Claims 1 to 8, **characterized in that** the two panels (12, 13) can be moved into the stored position individually or jointly, in particular as a coupled unit.

10. Motor vehicle according to one of Claims 4 to 9, **characterized in that** each lateral guide has a first guide section (14) on the roof longitudinal member (7), a second guide section (16) along a roof pillar (9), and a third guide section (19) in the bottom region of the interior of the vehicle, behind the front seats (18).

11. Motor vehicle according to one of Claims 4 to 10, **characterized in that** each guide is formed as a guide rail running continuously.

12. Motor vehicle according to one of Claims 8 to 11, **characterized in that** the additional roof closing device (31) is arranged on the vehicle roof (2) such that it can be detached and, in particular in a compact mounting arrangement, can be used on the roof longitudinal members (7) and/or the roof pillars (9) by means of a fixing device or removed therefrom.

13. Motor vehicle according to one of Claims 8 to 11, **characterized in that** the additional roof closing device (31) is permanently arranged on the vehicle, and, when opened, can be accommodated in particular in a roof crossmember or in a holding compartment in the body.

14. Motor vehicle according to one of Claims 8 to 13, **characterized in that** the additional roof closing device (31) is formed as a folding hood and has a hood crossmember (33) to accommodate the opened folding hood and braces and hood fabric.

15. Motor vehicle according to one of Claims 8 to 14, **characterized in that** the additional roof closing device (31) can be displaced into a closed position, covering the roof closing device (4), when the roof closing device (4) is arranged in its closed position.

16. Motor vehicle according to one of Claims 1 to 15, **characterized in that** a supporting device is provided, which provides additional support to the roof closing device (4) arranged in its stored position, in particular to the rear panel (13).

17. Motor vehicle according to one of Claims 1 to 16, **characterized in that** a rear glass pane (10), in particular standing upright, is arranged behind the roof opening (3) so as to be fixed or movable, in particular such that it can be lowered vertically.

18. Motor vehicle according to one of Claims 1 to 17, **characterized in that** the roof closing device (4) has on the inside a contour suitable for a body and appropriate for a seat.

## Revendications

1. Véhicule automobile avec un toit ouvrant (2) et avec un ensemble de fermeture de toit (4), qui peut être déplacé entre une position fermée fermant une ouverture de toit (3) et une position de rangement dégageant l'ouverture de toit,
sachant qu'une ouverture (36) est prévue à l'intérieur de l'ensemble de fermeture de toit (4), ouverture qui peut être au choix dégagée ou fermée au moyen d'un élément de fermeture déplaçable (34),
**caractérisé en ce que** l'ensemble de fermeture de toit (4) forme dans sa position de rangement un module fonctionnel,
et **en ce que**, lorsque l'ensemble de fermeture de toit (4) est disposé dans la position de rangement, l'élément de fermeture (34) permet, dans sa position ouverte, d'accéder à un dispositif de sécurité associé qui est disposé sur le côté de l'ensemble de fermeture de toit (4) déplacé dans sa position de rangement qui est opposé à l'habitacle du véhicule.

2. Véhicule automobile selon la revendication 1, **caractérisé en ce que** l'ensemble de fermeture de toit (4) forme comme module fonctionnel au moins un siège arrière (29, 30) du véhicule, et **en ce que**, lorsque l'ensemble de fermeture de toit (4) est disposé dans la position de rangement, l'élément de fermeture (34) permet, dans sa position ouverte, d'accéder à au moins un fermoir de ceinture (38) d'un système de ceinture de sécurité qui est disposé sur le côté de l'ensemble de fermeture de toit (4) déplacé dans sa position de rangement qui est opposé à l'habitacle du véhicule.

3. Véhicule automobile selon la revendication 1 ou 2, **caractérisé en ce que** l'élément de fermeture (34) peut être déplacé entre la position ouverte et la position fermée tant lorsque l'ensemble de fermeture de toit (4) est fermé que lorsqu'il est rangé.

4. Véhicule automobile selon l'une des revendications 1 à 3, **caractérisé en ce que** l'ensemble de fermeture de toit (4) présente deux panneaux (12, 13) qui sont guidés en translation sur des guides (14, 15, 16, 17, 19) solidaires du véhicule, qui peuvent être pivotés l'un par rapport à l'autre tandis qu'ils se déplacent le long de l'allure courbe des guides (14, 15, 16, 17, 19), et qui forment dans la position de rangement une assise (29) ou respectivement un dossier (30) du siège arrière au moins unique.

5. Véhicule automobile selon l'une des revendications 1 à 4, **caractérisé en ce que** l'élément de fermeture (34) est monté à translation ou à pivotement sur l'ensemble de fermeture de toit (4), et notamment est monté du côté du bord avant sur le panneau arrière (13) parmi les deux panneaux (12, 13).

6. Véhicule automobile selon l'une des revendications 1 à 5, **caractérisé en ce que** l'élément de fermeture est un volet (34) qui peut être ouvert par pivotement, par son bord avant (37), en direction de l'ensemble de fermeture de toit (4) ou encore du panneau (13).

7. Véhicule automobile selon l'une des revendications 1 à 6, **caractérisé en ce que** l'ensemble de fermeture de toit (4) est monté à translation sur des guides (14, 15, 16, 17, 19) solidaires du véhicule qui sont disposés sur des longerons de toit (7) disposés de part et d'autre de l'ouverture de toit (3), et sur les structures latérales de la carrosserie.

8. Véhicule automobile selon l'une des revendications 1 à 7, **caractérisé en ce qu'**il est prévu un ensemble auxiliaire (31) de fermeture de toit, qui ferme au choix l'ouverture de toit (3) lorsque l'ensemble de fermeture de toit (4) est disposé dans sa position de rangement.

9. Véhicule automobile selon l'une des revendications 1 à 8, **caractérisé en ce que** les deux panneaux (12, 13) peuvent être déplacés dans la position de rangement individuellement ou conjointement, notamment sous la forme d'une unité accouplée.

10. Véhicule automobile selon l'une des revendications 4 à 9, **caractérisé en ce que** chaque guide latéral présente un premier tronçon de guide (14) sur le longeron de toit (7), un deuxième tronçon de guide (16) le long d'un montant de toit (9) et un troisième tronçon de guide (19) dans la région du plancher de l'habitacle du véhicule, derrière les sièges avant (18).

11. Véhicule automobile selon l'une des revendications 4 à 10, **caractérisé en ce que** chaque guide est réalisé sous forme de rail de guidage s'étendant de manière continue.

12. Véhicule automobile selon l'une des revendications 8 à 11, **caractérisé en ce que** l'ensemble auxiliaire (31) de fermeture de toit est disposé de manière amovible sur le toit de véhicule (2) et peut notamment, en un ensemble de montage compact et au moyen d'un dispositif de fixation, être installé sur les longerons de toit (7) et/ou les montants de toit (9) ou en être retiré.

13. Véhicule automobile selon l'une des revendications 8 à 11, **caractérisé en ce que** l'ensemble auxiliaire (31) de fermeture de toit est disposé de manière durable sur le véhicule et peut, lors de l'ouverture, être notamment reçu dans une traverse de toit ou dans un espace récepteur dans la carrosserie.

14. Véhicule automobile selon l'une des revendications 8 à 13, **caractérisé en ce que** l'ensemble auxiliaire (31) de fermeture de toit est réalisé sous forme de capote pliante et présente une traverse de capote (33) pour recevoir la capote ouverte ou encore des arceaux et un tissu de capote.

15. Véhicule automobile selon l'une des revendications 8 à 14, **caractérisé en ce que** l'ensemble auxiliaire (31) de fermeture de toit peut être déplacé dans une position fermée, recouvrant l'ensemble de fermeture de toit (4), lorsque l'ensemble de fermeture de toit (4) est disposé dans sa position fermée.

16. Véhicule automobile selon l'une des revendications 1 à 15, **caractérisé en ce qu'**il est prévu un dispositif de soutien qui fournit un soutien supplémentaire de l'ensemble de fermeture de toit (4) disposé dans sa position de rangement, notamment du panneau arrière (13).

17. Véhicule automobile selon l'une des revendications 1 à 16, **caractérisé en ce qu'**une lunette arrière (10), notamment en position verticale, est disposée fixement ou à déplacement, notamment en pouvant être abaissée verticalement, derrière l'ouverture de toit (3).

18. Véhicule automobile selon l'une des revendications 1 à 17, **caractérisé en ce que** l'ensemble de fermeture de toit (4) présente sur le côté intérieur un contour de siège adapté au corps des occupants.
